# EUROPÄISCHE PATENTSCHRIFT

(11) **EP 2 524 604 B1**
(45) Veröffentlichungstag und Bekanntmachung des Hinweises auf die Patenterteilung: **15.10.2014**
(21) Anmeldenummer: 12151199.2
(22) Anmeldetag: 16.01.2012
(51) Int. Cl.: A23L 1/00, A23L 1/16, A23L 1/212, A23L 1/325, A23P 1/08

(54) **Tiefgekühltes, paniertes Lebensmittel, insbesondere Fischstäbchen**
Frozen breaded food product, in particular fish fingers
Aliment pané congelé, notamment bâtonnets de poisson panés

(30) Priorität: 17.05.2011 EP 11166408
(43) Veröffentlichungstag der Anmeldung: 21.11.2012
(73) Patentinhaber: FRoSTA Aktiengesellschaft, 27572 Bremerhaven (DE)
(72) Erfinder: Buschmann, Urban, 31535 Neustadt a.Rbg. (DE); Mahlstedt, Melanie, 27578 Bremerhaven (DE)
(74) Vertreter: Raffay & Fleck

(56) Entgegenhaltungen:
- US-A- 4 199 603
- US-A- 4 518 620
- US-A- 4 640 837
- US-A- 6 162 481

## Beschreibung

Die Erfindung betrifft ein paniertes Lebensmittel, insbesondere Fischstäbchen, für die Zubereitung in einer Mikrowelle sowie ein Verfahren zur Herstellung eines solchen Lebensmittels.

Panierte Lebensmittel bestehen in vereinfachter Darstellung aus einem Kern (Fisch, Fleisch, Gemüsemasse) bedeckt mit einer Nasspanade (gewöhnlich Wasser mit Mehl und ggf. Stärke) und einer Trockenpanade. Je nach empfohlener Zubereitung wird das panierte Produkt vor dem Gefrieren vorfrittiert (z.B. Fischstäbchen bei 190°C über 30 Sek.) oder auch fertig gegart und tiefgefroren gelagert. Während der Tiefkühllagerung wandert das Wasser aus dem Kern des Lebensmittels oder aus der Nasspanade in die Trockenpanade und lässt sie erweichen. Des Weiteren nimmt die Trockenpanade auch Feuchtigkeit aus der Tiefkühlumgebung auf, was zum verstärkten Erweichen der äußeren Schicht des Produktes führt. Erfolgt die Zubereitung eines derartigen Produktes nach einer Tiefkühllagerung in der Pfanne, Fritteuse oder Backofen, erzielt man ein gutes sensorisches Ergebnis. Der Grund dafür ist die von außen einwirkende Wärme bei den erwähnten Zubereitungsmethoden, wodurch die Trockenpanade wieder knusprig wird.

Die Zubereitung dieser panierten Lebensmittel in der Mikrowelle ist stark nachteilig, da das Lebensmittel ausgehend vom Kern erwärmt wird. Es fehlt die Knusprigkeit wiederherstellende Hitzeinwirkung von außen. Besonders ungeeignet für die Zubereitung in der Mikrowelle sind panierte Fischprodukte, bei denen der Kern des Produktes roh und stark wasserhaltig ist.

Es gibt auf dem Markt panierte Produkte oder Produkte im Backteig für die Mikrowellenzubereitung. Es handelt sich dabei immer um durchgegarte Produkte (Hähnchen) bzw. Produkte mit niedrigem Wassergehalt, bei denen das Wasser zusätzlich durch spezielle Bindemittel besonders gebunden wird. Auch existieren Lösungen mit durch die Mikrowelle erhitzten Unterlagen.

Es ist bekannt, dass bei nur kurzer Tiefkühllagerzeit unter Einsatz von marktüblichen Panaden ein knuspriges Produkt aus der Mikrowelle erzielt werden kann. Es handelt sich hierbei um vorfrittierte oder nicht vorfrittierte Produkte mit einer vorgerösteten Trockenpande. Nach einer Tiefkühllagerzeit von ca. 2 Wochen und nach einer Mikrowellenzubereitung ist die Knusprigkeit nur geringfügig bis gar nicht festzustellen. Dabei sollte die Lagerfähigkeit eines derartigen Produktes in der Tiefkühlkette mindestens 6 Monate und insbesondere mindestens 9 Monate betragen. Es ist bekannt, dass diese Produkte auch nach 9-monatiger Lagerung immer noch ein gutes Ergebnis nach der Zubereitung im Backofen ergeben.

Es ist auch bekannt, dass bei einem konventionellen Fischstäbchen, bestehend aus einem wasserhaltigen Fischkern, einer wasserhaltigen Nasspanade und darüber liegenden Trockenpanade, verpackt in einer Folie unter Vakuum eine schnellere Durchfeuchtung der Trockenpanade erfolgt, da das Vakuum die Wasserdiffusion von Innen in die Außenschicht des Produktes beschleunigt. Eine Zubereitung in der Mikrowelle führt zu unbefriedenden Ergebnissen.

Es werden auch Beschichtungen für vorfrittierte Produkte für die Mikrowellenzubereitung beschrieben, die ein wässriges Gemisch aus Wasser, Stärke, Mehl, Enzyme und anderen Stoffen enthalten und ein gutes Ergebnis in der Mikrowelle liefern sollen (EP 0 820 239). Nachteilig sind die komplizierte Rezeptur und die Verwendung von Zusatzstoffen.

Die EP 0 273 475 beschreibt ein System, bei dem die Oberfläche des nassen Lebensmittels verschiedene in Wasser suspendierte trockene Komponenten zum Teil extrudiert, und teilweise vorverkleisterte Stärke, welche absorbiertes Fett oder Öl enthält, aufweist. Das fertig panierte Produkt ergibt ein knuspriges Ergebnis bei der Zubereitung im Backofen. Eine andere Variante wird 90 Sek. bei 180°C vorfrittiert. Ohne Benennung der Tiefkühllagerung und möglicher Veränderung im Produkt in dieser Zeit wird das Ergebnis dieser Variante aus der Mikrowellenzubereitung als knusprig ausgelobt.

In der US 4,518,620 wird ein Produktkern mit einer Emulsion (Wasser und Fett mit üblicherweise notwendigem Emulgator) überzogen. Ferner wird die darauf aufgebrachte geröstete Trockenpanade mit einer Eiweisslösung bedeckt. Das Produkt wird vorzugsweise im Backofen zubereitet. In der Mikrowelle wird das Produkt auf einer aluminiumbeschichteten Unterlage unter häufigem Wenden zubereitet, wobei durch den Hitzestau an der Alu-Unterlage ein allseitiges Trocknen der Oberfläche erfolgt. Nachteilig ist dabei, dass durch das notwendige Wenden die Vorteile der einfachen Zubereitung in der Mikrowelle verloren gehen.

In der US 4,199,603 wird ein System beschrieben, bei dem ein Lebensmittelkern mit einer wasserfreien Fettbeschichtung, vorzugsweise mit Kohlenhydraten oder Proteinen als Wasserabsorber, überzogen und eine geröstete Trockenpanade aufgetragen wird. Ohne Angaben für die Lagerungsbeständigkeit wird eine Zubereitung im Backofen und in der Mikrowelle beschrieben. Nachteilig ist jedoch der fehlende Schutz gegen Außenfeuchtigkeit, wodurch erwiesenermaßen eine Erweichung der Trockenpanade nach einer mehrwöchigen Tiefkühllagerung erfolgt. Des Weiteren erscheint nachteilig die vorzugsweise angegebene Verwendung von Kohlenhydraten in der Fettschicht über dem Produktkern, wodurch bei der Zubereitung in der Mikrowelle ein Abfließen der Fettschicht zu erwarten ist.

Der Erfindung liegt deshalb die Aufgabe zugrunde, panierte Lebensmittel anzugeben, insbesondere Fischstäbchen, die in der Mikrowelle zubereitet werden können und, auch nach längerer Tiefkühllagerung, eine knusprige Panade ergeben.

Diese Aufgabe wird erfindungsgemäß durch ein Lebensmittel gemäß Anspruch 1 sowie ein Verfahren nach Anspruch 6 gelöst.

Einerseits wurde für das erfindungsgemäße Lebensmittel bzw. Verfahren eine neue spezielle und praktisch wasserfreie Feuchtigkeitsbarriere entwickelt, die eine vollständige Feuchtigkeitsbarriere bei Temperaturen zumindest unter -10°C, insbesondere 0 °C, und verfestigende Eigenschaften zwischen dem Lebensmittelkern, wie beispielsweise Fisch und der Trockenpande, aufweist. Diese Temperaturgrenze wird deswegen gewählt, weil während der Tiefkühllagerung kurzzeitige Temperaturerhöhungen, z.B. während des Transports nach Hause, nicht auszuschließen sind. Diese Feuchtigkeitsbarriere besteht deswegen hauptsächlich aus einem Pflanzenfett, das sich zumindest unter -10°C, insbesondere 0 °C, im nicht fließfähigen Zustand befindet. Des Weiteren weist die Feuchtigkeitsbarriere Proteine, die bei der Zubereitung zu einer Stockung führen, auf.

Die wärmebehandelte Trockenpanade wird ferner mit einem Überzug (17) als weitere Schutzschicht versehen, die wasserundurchlässig ist. Vorzugsweise wird der Schutz durch das Auftragen einer Fettschicht auf die geröstete Panade vor dem Aufbringen der Panade auf das Produkt oder als eine Schutzschicht über das gesamte Produkt (z.B. mittels der Spinning Disc Technologie) erreicht. Diese Fettschicht kann die gleiche Komposition, wie die Feuchtigkeitsbarriere enthalten oder aufweisen. Vorzugsweise besteht sie aus Fett, das sich unter -10°C, insbesondere 0 °C im festen Zustand befindet. Der Schutz der Trockenpanade kann auch durch eine geschlossen verschweißte Kunststofffolienverpackung erzielt werden, und zwar insbesondere durch das Vakuumverpacken des Produktes, mit einem angelegten Vakuum von -0,3 bis -0,98, insbesondere -0,8 bis -0,95, bar und/oder unter Einschluss entsprechend trockener Atmosphäre, insbesondere mit einem Wasserdampfpartialdruck von höchstens 6g/m³, insbesondere höchstens 4g/m³. Aufgrund des Unterdrucks verschiebt sich der Erstarrungspunkt der Barriere, wodurch die Barriere flexibler wird und einen besser umschließenden Film bildet.

Damit das Fett bei der Zubereitung in der Mikrowelle die Funktion der Verbindung zwischen dem Produktkern und der Trockenpande erhält und nicht heraus fließt, wird das Fett erfindungsgemäß mit einem oder mehreren Proteinen, enthaltend Eiklarpulver, versetzt und ggf. weiter mit Magermilchpulver oder Molkenpulver stabilisiert. Insbesondere Hühnereiweiß, aber auch die Milchtrockenstoffe lösen sich sehr leicht und verbinden sich vollständig mit dem Pflanzenfett zu einer leicht kremigen und angedickten Flüssigkeit mit vorteilhaft einer Viskosität von 5 dPas bis 1050 dPas, insbesondere 30 dPas bis 270 dPas bei 5 °C (gemessen mit einem Haake Viskotester VT02). Dieses führt erfindungsgemäß zu sehr gleichmäßigen Überzügen auf der Oberfläche des Lebensmittels und erleichtert die Maschinengängigkeit der Feuchtigkeitsbarriere vor dem Aufbringen auf das Lebensmittel. Die im Hühnereiweiß enthaltene Globuline erleichtern das Aufschäumen der Barriere. Das Ovalbumin (58% der Eiklarproteine), das beim späteren Zubereiten in der Mikrowelle sehr leicht denaturiert (Gelbildung und Schaumstabilisierung) und das Pflanzenfett in die Proteinmatrix einschließt, verhindert folglich vollständig einen Fettaustritt. Ähnliche, aber etwas schwächere derartige Effekte, werden durch die Verwendung von Magermilchpulver oder Molkenpulver erzielt, wobei die funktionellen Proteine (Lactalbumin und Laktoglobulin) in der Molke enthalten sind. Aber auch der gleichzeitige Einsatz vom Eiklarpulver und Molkenpulver führt zu einer verstärkenden Wirkung in Bezug auf die Festigkeit der Proteinmatrix in der Fettsuspension bei der Mikrowellenzubereitung. Dieses kann daran liegen, dass beim Denaturieren und dem Verlust der natürlichen Proteinstruktur das Ovalbumin des Eiklars und das -Lactoglobulin aus der Molke zusätzliche Disulfid-Brücken (S-S) aus den vorhanden Thiolgruppen (S-H) ausbilden können. Andere Proteinfraktionen wie Conalbumin und das -Lactalbumin unterstützen diese Reaktion durch Schaffung von freien S-H Gruppen. Erfindungsgemäß äußert sich dieser Zustand dadurch, dass durch Veränderung der Menge an Molkenpulver die Struktur der erstarrten Fettschicht von "pulvrig" bis "ledrig".

Die Trockenpanade, umfassend insbesondere Weizenmehl, Hefe, Paprika, Kochsalz und Restfeuchtigkeit, wird vor dem Auftragen auf das Produkt einer Wärmebehandlung, insbesondere durch Rösten, unterzogen. Dieses kann in einem Heißluftofen (z.B. Fa. Rational, Typ SCC 61, 10 kW) auf einem ½ Gastronomieblech bei einer Temperatur von 190 °C bis 230 °C, vorteilhafterweise bei 200 °C bis 220 °C, mit insbesondere einer Menge von 1 kg Trockenpanade, mit Zugabe von 2 bis 30 Gew. % Fett und insbesondere 5 bis 15 Gew. % Fett in einer Zeit von 5 bis 17 Min. und insbesondere in einer Zeit von 11 bis 15 Min., unter periodischem Rühren mittels eines Rührrechens erreicht werden. Durch die Hitzebehandlung der Trockenpanade kommt es zu einer nichtenzymatischen Bräunung (Maillard Reaktion) und auch zum Dextrinieren (Abbau von Stärke) wie auch zur Oxidation von Zuckern und anderen Reaktionen (Karamellisierung), wobei sich ein sogen. "Glaszustand" ergibt. Die Trockenmasse der gerösteten Panade beträgt 98 Gew. % bis 99 Gew. %, während die ungeröstete Panade eine Trockenmasse von ca. 90 Gew.% aufweist (Trockenmassen gemessen mit dem Moisture Analyser MJ33 von Mettler Toledo bei einer 5g Probe). Dieser Zustand der Trockenpanade ist erwünscht und zeichnet sich durch ein bestimmtes Röstaroma und eine besondere Knusprigkeit aus.

Durch die Veränderung der chemischen Struktur der Trockenpanade aufgrund des Röstens, wird die Tiefkühllagerfähigkeit positiv beeinflusst. Dieses kann auch anhand eines veränderten Verhaltens gegenüber Wassereinwirkung aufgezeigt werden. Der bevorzugte Röstgrad der Trockenpanade kann gemessen werden, indem in einem Behälter 25g Trockenpanade mit 50g Wasser vermengt und 5 Min. stehen gelassen, sowie zu einer Probe (Durchmesser: 45 mm, Höhe: 44 mm) geformt werden. In diese Probe wird ein runder Stempel (Durchmesser: 35 mm) mit über die Fläche des Stempels verteilten vier Öffnungen (Durchmesser: 10 mm) mit einer konstanten Geschwindigkeit von 500 mm/Min. eingefahren und ein Kraft/Weg-Diagramm aufgenommen. Hieraus werden nach einem Weg des Prüfkörpers von 17 mm bei der vorteilhaften Panade eine maximale Kraft von 7 N bis 70 N, insbesondere 15 N bis 30 N, ermittelt.

Das Auftragen der erfindungsgemäßen Feuchtigkeitsbarriere, die das Lebensmittel auch vollständig überziehen kann, erfolgt beispielsweise mittels eines Tauch-und Vorhangdosierers, wobei die überschüssige Nasspanade mittels Druckluftdüsen entfernt wird. Alternativ kann der Auftrag der Feuchtigkeitsbarriere mittels eines Spinning-Disc Dosierers erfolgen, in dem die Flüssigkeit bzw. Suspension der Feuchtigkeitsbarriere mittels rotierender Teller fein verteilt wird, wobei direkt der gewünschte Schutzfilm der Feuchtigkeitsbarriere aufgetragen wird.

Die Temperatur der neuartigen Feuchtigkeitsbarriere vor dem Auftragen richtet sich insbesondere nach der Temperatur des zu ummantelnden Kerns. Im Fall von Fischstäbchen, die aus einem gefrorenen Block gesägt werden, wird die Nasspanadentemperatur vorteilhafterweise auf 15 bis 20 °C eingestellt. Im Fall von Fischburgern, oder geformten Gemüseprodukten kann die Temperatur der Nasspanade beispielsweise 10 bis 15°C betragen. Die Trockenpanierung erfolgt mit Vorteil unmittelbar und wird abgeschlossen, bevor die Feuchtigkeitsbarriere durch Abkühlen 8 °C, insbesondere 10 °C erreicht und somit noch genügend Aufnahmefähigkeit für die Trockenpanade bietet.

Nach dem Trockenpanieren wird das Produkt vorteilhafterweise auf -25 °C in einem konventionellen Froster gefrostet, verpackt und bei -18 °C oder tiefer gelagert.

Die Zubereitung kann in einer konventionellen Mikrowelle bei 600 W in einer Zeit abhängig von der Anzahl der Produkte auf einer Mikrowellen geeigneten Unterlage erfolgen. Im Fall von Fischstäbchen mit 30g Stückgewicht sind es bei 3 Stück beispielsweise 2 Minuten und 30 Sekunden und bei 6 Stück 4 Minuten, wobei im Kern des Produktes eine Temperatur von ca. 80°C erreicht wird. Das Produkt wird nach dem Zubereiten ca. 2 Minuten stehen gelassen, um die Temperatur im Kern auszugleichen. Die Außenschicht des Produktes ist knusprig und die Barriere über dem Lebensmittelkern gut gebunden und ohne Fettaustritt. Die Zubereitung kann auch im Backofen (z.B. Fischstäbchen im auf 230°C vorgeheizten Backofen, 15 Min.) oder in der Pfanne erfolgen.

Als Produktkern können beliebige Lebensmittel gewählt werden. Im Fall vom Fisch kann das Seelachs, Pangasius, Alaska Pollock oder Lachs sein. Andere Fischsorten sind auch gut geeignet. Im Fall von Gemüseprodukten können vorgegarte Karotten oder andere Gemüsesorten als Stücke oder auch eine Mischung, beispielsweise von Erbsen, Karottenwürfel, Sellerie und weiteren Gemüsesorten vermengt mit Bindmitteln und geformt zu Stäbchen oder anderen Figuren verwendet werden. Im Fall von Geflügelprodukten wird das Fleisch vorzerkleinert und gegart oder als Stücke aus gewachsenem Muskel vorgegart.

Die Vorteile des erfindungsgemäßen Lebensmittels für die Mikrowellenzubereitung sind:
- Nutzung der Mikrowelle als ein bekanntes Küchengerät
- Bedarf an sehr wenig Geschirr zum Zubereiten und folglich niedriger Abwaschaufwand
- Gegenüber der Backofenzubereitung ergibt sich ein mehrfach niedrigerer Energieverbrauch beim Zubereiten, insbesondere, wenn nur kleine Produktmengen benötigt werden
- Vermeidung von Pfannen- oder Backofenzubereitung zugunsten der Mikrowelle, wodurch sich eine bessere Eignung für Kinder ergibt.

### Produktbeispiele:

### Beispiel 1.

Fischstäbchen z.B. aus Pangasius.

Die Trockenpanade wird bei 220°C und Umluft im Beisein von 15 Gew.% Fett über 11 Minuten in einem Umluftofen unter wiederkehrendem Rühren geröstet und bereit gestellt. In einer Dragiertrommel wird 15 Gew.% weiteres, verflüssigtes Fett aufgetragen und mittels flüssigen Stickstoffs bei weiterer Bewegung zu einer geschlossenen Schutzschicht verfestigt, wobei die Panadenpartikel frei fließend und nicht verklebt bleiben.

Als Feuchtigkeitsbarriere um den Fischkern wird eine Pflanzenfettsuspension hergestellt, indem das Fett aufgeschmolzen und in einem temperierten Homogenisatorsystem mit den Trockenstoffen bei 1550 rpm für 20 Sek. homogen vermengt wird. Rezeptur der Feuchtigkeitsbarriere:
- Pflanzenfett 58%
- Eiweisspulver 40%
- Paprikapulver 2%

Aus einem Block an tiefgefrorenem Pangasius wird z.B. ein 19,5g Fischstück gesägt und mit einer Menge von 5g der oben beschriebenen Feuchtigkeitsbarriere bei einer Temperatur von 18 °C gleichmäßig mittels eines Vorhangdosierers bedeckt. Unmittelbar danach wird die oben beschriebene geröstete mit einer Fettschicht überzogene Trockenpanade von allen Seiten in einer Menge von z.B. 5,5g darauf gebracht. Anschließend folgt eine Frostung insbesondere bis -25 °C und eine Tiefkühllagerung bei -26 °C bis -18 °C.

Nach einer Tiefkühllagerung werden 6 Fischstäbchen auf einer mikrowellengeeigneten Unterlage in einer Mikrowelle bei 600 W in 4 Minuten zubereitet. Der Kern des Produktes erreicht mind. 80°C und die Außenschicht ist knusprig.

### Beispiel 2

Fischstäbchen z.B. aus Seelachs.

Die Trockenpanade wird bei 220°C und Umluft im Beisein von 5 Gew.% Fett über 15 Minuten in einem Umluftofen unter wiederkehrendem Rühren geröstet und bereit gestellt. Anschließend wird in einer Dragiertrommel 25 Gew.% weiteres, verflüssigtes Fett aufgetragen und mittels flüssigen Stickstoffs bei weiterer Bewegung zu einer geschlossenen Schutzschicht verfestigt, wobei die Panadenpartikel frei fließend und nicht verklebt bleiben.

Als Feuchtigkeitsbarriere um den Fischkern wird eine Pflanzenfettsuspension hergestellt, indem das Fett aufgeschmolzen und in einem temperierten Homogenisatorsystem mit den Trockenstoffen bei 1550 rpm 25 Sek. homogenen vermengt wird. Rezeptur der Feuchtigkeitsbarriere:
- Pflanzenfett 64%
- Eiweisspulver 30%
- Molkenpulver 4%
- Paprikapulver 2%

Aus einem Block an tiefgefrorenem Seelachs wird z.B. ein 19,5g Fischstück gesägt und mit einer Menge von 5g der oben beschriebenen Feuchtigkeitsbarriere bei einer Temperatur von 18 °C gleichmäßig mittels eines Vorhangdosierers bedeckt. Unmittelbar danach wird die oben beschriebene geröstete mit einer Fettschicht überzogene Trockenpanade von allen Seiten in einer Menge von z.B. 5,5g darauf gebracht. Anschließend folgt eine Frostung insbesondere bis -25 °C und eine Tiefkühllagerung bei -26 °C bis -18 °C.

Nach einer Tiefkühllagerung werden 6 Fischstäbchen mit jeweils 30g Stückgewicht auf einer mikrowellengeeigneten Unterlage in einer Mikrowelle bei 600 W in 4 Minuten zubereitet. Der Kern des Produktes erreicht mind. 80°C und die Außenschicht ist knusprig.

### Beispiel 3

Fischfrikadelle.

Die Trockenpanade wird bei 210 °C und Umluft im Beisein von 15 Gew.% Fett über 13 Minuten in einem Umluftofen unter wiederkehrendem Rühren geröstet und bereit gestellt. Anschließend wird in einer Dragiertrommel 15 Gew.% weiteres, verflüssigtes Fett aufgetragen und mittels flüssigen Stickstoffs bei weiterer Bewegung zu einer geschlossenen Schutzschicht verfestigt, wobei die Panadenpartikel frei fließend und nicht verklebt bleiben.

Als Feuchtigkeitsbarriere um die im Schlüsselkutter hergestellte Fischmasse (Rezeptur: Fischmus 62%, Weißbrot 9%, Zwiebel und Porree 3%, Senf 3,5%, Kräuter und Gewürze 13% und Wasser 9,5%) wird eine Pflanzenfettsuspension hergestellt, indem das Fett aufgeschmolzen und in einem temperierten Homogenisatorsystem mit den Trockenstoffen bei 1550 rpm 20 Sek. homogenen vermengt wird. Rezeptur der Feuchtigkeitsbarriere:
- Pflanzenfett 63%
- Eiweisspulver 33%
- Molkenpulver 2%
- Paprikapulver 2%

Auf frisch geformten Fischburgern mit einem Gewicht von z.B. 52g werden 5,5g der oben beschriebenen Feuchtigkeitsbarriere bei einer Temperatur von 15 °C gleichmäßig mittels eines Vorhangsdosierers aufgetragen. Unmittelbar danach wird die oben beschriebene geröstete mit einer Fettschicht überzogene Trockenpanade von allen Seiten in einer Menge von z.B. 5g darauf gebracht. Anschließend folgt eine Frostung insbesondere bis -25 °C und eine Tiefkühllagerung bei - 26 °C bis -18 °C. Nach einer Tiefkühllagerung werden drei Fischstäbchen auf einer mikrowellengeeigneten Unterlage in einer Mikrowelle bei 600 W in 5 Minuten zubereitet. Der Kern des Produktes erreicht mind. 80 °C und die Außenschicht ist knusprig.

### Beispiel 4

Gemüse: z.B. Kohlrabistreifen und Karottenscheiben.

Die Trockenpanade wird bei 200 °C und Umluft im Beisein von 15% Fett über 21 Minuten in einem Umluftofen unter wiederkehrendem Rühren geröstet und bereit gestellt. Anschließend wird in einer Dragiertrommel 15% weiteres, verflüssigtes Fett aufgetragen und mittels flüssigen Stickstoffs bei weiterer Bewegung zu einer geschlossenen Schutzschicht verfestigt, wobei die Panadenpartikel frei fließend und nicht verklebt bleiben.

Als Feuchtigkeitsbarriere um den Fischkern wird eine Pflanzenfettsuspension hergestellt, indem das Fett wird aufgeschmolzen und in einem temperierten Homogenisatorsystem mit den Trockenstoffen bei 1550 rpm 20 Sek. homogenen vermengt. Rezeptur der Feuchtigkeitsbarriere:
- Pflanzenfett 63%
- Eiweisspulver 35%
- Paprikapulver 2%

Aus einem geputzten Gemüse werden Streifen und/oder Scheiben geschnitten und verzehrsfertig gegart und bis insbesondere -18 °C tiefgefroren. Anschließend werden die Gemüsestückchen mit einer oben beschriebenen Feuchtigkeitsbarriere bei einer Temperatur von z.B. 18 °C gleichmäßig mittels eines Vorhangdosierers bedeckt. Unmittelbar danach wird die oben beschriebene geröstete mit einer Fettschicht überzogene Trockenpanade von allen Seiten darauf gebracht. Folgende Zusammensetzung wird beispielsweise erreicht:
Kohlrabistreifen (Kern: 4g, Feuchtigkeitsbarriere: 0,9g, geröstete Trockenpanade: 3,2g)
Karottenscheiben (Kern: 3,1 g, Feuchtigkeitsbarriere: 1,4g, geröstete Trockenpanade: 3,8g)
Anschließend folgt eine Frostung insbesondere bis -25 °C und eine Tiefkühllagerung bei -26 °C bis -18 °C.

Nach einer Tiefkühllagerung werden 100g gecoatetes Gemüse auf einer mikrowellengeeigneten Unterlage in einer Mikrowelle bei 600 W in 2 Minuten 25 Sekunden zubereitet. Der Kern des Produktes erreicht mind. 80°C und die Außenschicht ist knusprig.

### Beispiel 5

### Gemüsestäbchen.

Die Trockenpanade wird bei 220°C und Umluft im Beisein von 15% Fett über 12 Minuten in einem Umluftofen unter wiederkehrendem Rühren geröstet und bereit gestellt. Anschließend wird in einer Dragiertrommel 15% weiteres, verflüssigtes Fett aufgetragen und mittels flüssigen Stickstoffs bei weiterer Bewegung zu einer geschlossenen Schutzschicht verfestigt, wobei die Panadenpartikel frei fließend und nicht verklebt bleiben.

Als Feuchtigkeitsbarriere um die im Schüsselkutter hergestellte Gemüsemasse (Rezeptur: z.B. Sellerie, Brokkoli, Mais, Karotten und Kartoffel in Würfelform 70%, Vollei 3%, Edamer Käse 14%, Kartoffelflocken 2%, weitere Bindemittel und Gewürze 6% und Wasser 5%) wird eine Pflanzenfettsuspension hergestellt, indem das Fett wird aufgeschmolzen und in einem temperierten Homogenisatorsystem mit den Trockenstoffen bei 1550 rpm 20 Sek. homogenen vermengt. Rezeptur der Feuchtigkeitsbarriere:
- Pflanzenfett 68%
- Eiweisspulver 25%
- Molkenpulver 5%
- Paprikapulver 2%

Frisch geformte Gemüsestäbchen mit einem Gewicht von 29g werden 5g der oben beschriebenen Feuchtigkeitsbarriere bei einer Temperatur von 15 °C gleichmäßig mittels eines Vorhangsdosierers aufgetragen. Unmittelbar danach wird die oben beschriebene geröstete mit einer Fettschicht überzogene Trockenpanade von allen Seiten in einer Menge von 6g darauf gebracht. Anschließend folgt eine Frostung bis -25 °C und eine Tiefkühllagerung bei -26 °C bis -18 °C. Nach einer Tiefkühllagerung werden 3 Gemüsestäbchen auf einer mikrowellengeeigneten Unterlage in einer Mikrowelle bei 600 W in 3 Minuten zubereitet. Der Kern des Produktes erreicht mind. 80°C und die Außenschicht ist knusprig.

Zum besseren Verständnis wird im Folgenden ein Ausführungsbeispiel beschrieben. Es zeigt:

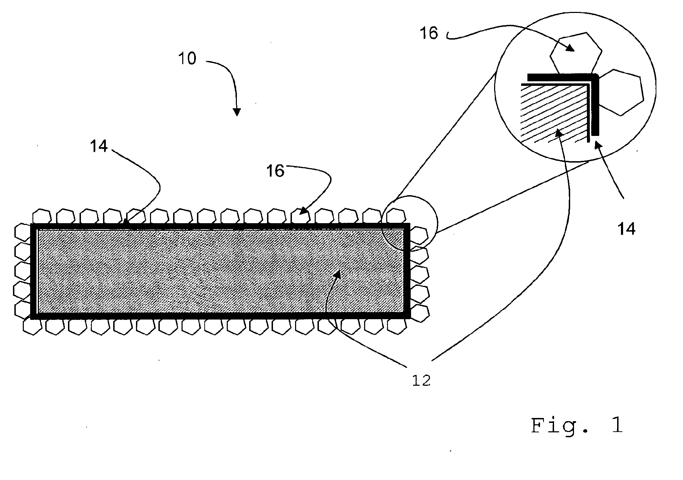

- Fig. 1: Eine schematische Darstellung eines Produktes für die Mikrowellenzubereitung am Beispiel eines Fischstäbchens.

Figur 1 zeigt einen Schnitt durch ein erfindungsgemäßes Lebensmittel 10, aufweisend einen wasserhaltigen Lebensmittelkern 12 aus Fisch. Der Lebensmittelkern ist umschlossen von einer Feuchtigkeitsbarriere 14 aus Pflanzenfett und insbesondere Eiweißpulver. Darüber und gebunden an die Feuchtigkeitsbarriere 14 ist eine Schicht aus gerösteter Trockenpanade 16 angeordnet. Die Trockenpanade wird von der Aussenfeuchtigkeit durch eine weitere Fettschicht 17 geschützt. Die Fettschicht kann auch das gesamte Lebensmittel umschließen. Statt der Fettschicht ist auch eine (nicht gezeigte) Vakuumverpackungsfolie denkbar.

### Bezugszeichenliste

- 10: Lebensmittel
- 12: Lebensmittelkern
- 14: Feuchtigkeitsbarriere
- 16: geröstete Trockenpanade
- 17: Feuchtigkeitsschutz der Trockenpanade gegen Außenfeuchtigkeit

## Patentansprüche

1. Tiefgekühltes paniertes Lebensmittel (10), insbesondere essfertig zubereitbar in einer
Mikrowelle, umfassend:
a. einen wasserhaltigen Lebensmittelteil (12) mit einer Trockenpanade (16)
b. wobei eine von ungebundenem Wasser freie Feuchtigkeitsbarriere (14) zwischen dem wasserhaltigen Lebensmittelteil (12) und der Trockenpanade aufgetragen ist;
c. wobei die Feuchtigkeitsbarriere (14) Pflanzenfett zusammen mit einem oder mehreren Proteinen enthaltend Eiklar - und/oder Molkenpulver, das bzw. die bei Hitzeeinwirkung während der Zubereitung als Stockungs- und Verdickungsmittel dient bzw. dienen, umfasst und sich zumindest bei -10°C im nicht fließfähigen Zustand befindet und
d. wobei die Trockenpanade aus wärmebehandelten Panadestückchen besteht und von einer wasserundurchlässigen Schutzschicht umhüllt ist.

2. Paniertes Lebensmittel nach Anspruch 1, **dadurch gekennzeichnet, dass** das Pflanzenfett 49 bis 90 Gew.%, insbesondere 58 bis 68 Gew.% und die Proteine 10 bis 51 Gew.%, insbesondere 25 bis 40 Gew.% der Feuchtigkeitsbarriere stellen.

3. Paniertes Lebensmittel nach einem der vorstehenden Ansprüche, **dadurch gekennzeichnet, dass** die Feuchtigkeitsbarriere (14) als Proteine Eiklarpulver, insbesondere 10 bis 51 Gew.% und/oder Magermilchpulver, insbesondere 7 bis 15 Gew. % und/oder Molkenpulver, insbesondere 2 bis 5 Gew. % und ggf. weitere geschmacksgebende oder färbende Bestandteile aufweist.

4. Paniertes Lebensmittel nach einem der vorstehenden Ansprüche, **dadurch gekennzeichnet, dass** die Trockenpanade (16) mit 2 bis 30 Gew.%, insbesondere 5 bis 15 Gew. % Fett so geröstet ist, dass die max. Kraft zum Eintreiben eines runden Stempels mit 35 mm Durchmesser und 4 Öffnungen mit jeweils 10 mm bei einer Geschwindigkeit von 500 mm/Min. in eine Probe von 1 Teil der Trockenpanade vermengt mit 2 Teilen Wasser nach einer Standzeit von 5 Min. 10 bis 70 N, insbesondere 17 bis 50 N beträgt.

5. Lebensmittel nach einem oder mehreren der vorstehenden Ansprüche 1 bis 4, **dadurch gekennzeichnet, dass** die Schutzschicht eine Fettschicht ist und/oder durch eine geschlossen verschweißte Kunststofffolienverpackung gebildet ist, in der ein Wasserdampfpartialdruck von höchstens 6g/m³ und/oder ein Vakuum von -0,3 bis -0,98 bar herrscht.

6. Verfahren zum Herstellen eines panierten Lebensmittels, insbesondere nach einem der vorstehenden Ansprüche, **dadurch gekennzeichnet, dass** ein Lebensmittelteil mit einer flüssigen Feuchtigkeitsbarriere, insbesondere vollständig, überzogen wird, und dass darauffolgend eine Trockenpanierung mit wärmebehandelten Panadestückchen erfolgt, während zumindest die Oberfläche der Feuchtigkeitsbarriere flüssig ist, wobei die Trockenpanade mit einer Wasserdampf undurchlässigen Schutzschicht umhüllt wird, und wobei die Feuchtigkeitsbarriere (14) 49 bis 90 Gew. % Pflanzenfett, das sich zumindest bei -10°C im nicht fließfähigen Zustand befindet, zusammen mit 10 bis 51 Gew.% eines oder mehrerer Proteine enthaltend Eiklar - und/oder Molkenpulver, das bzw. die bei Hitzeeinwirkung während der Zubereitung als Stockungs- und Verdickungsmittel dient bzw. dienen, umfasst und wobei das Lebensmittel nach der Trockenpanierung gefrostet wird.

7. Verfahren nach Anspruch 6, **dadurch gekennzeichnet, dass** die Trockenpanierung erfolgt, während die Feuchtigkeitsbarriere (14) zumindest an ihrer Oberfläche eine Temperatur von mindestens 10 bis 20°C aufweist, insbesondere nach der Auftragung der Feuchtigkeitsbarriere und vor der Trockenpanierung weiter abgekühlt wird.

8. Verfahren zum Herstellen eines panierten Lebensmittels nach einem oder mehreren der vorstehenden Ansprüche 5 bis 7, **dadurch gekennzeichnet, dass** die Schutzschicht durch eine Fettschicht (14) gebildet wird, die in einem Dragierverfahren auf die wärmebehandelte/vorgeröstete Trockenpanade (16) aufgetragen wird, wobei insbesondere die Trockenpanade bei 15 bis 25°C, insbesondere bei 20 bis 22°C, in einer Trommel in Bewegung gehalten und mit der Fettschicht bei gleicher Temperatur gleichmäßig besprüht und anschließend insbesondere die besprühte Trockenpanade, vorzugsweise mit flüssigen Stickstoff, unter weiterer Bewegung der Trockenpanade auf zumindest -10°C abgekühlt wird und insbesondere ein Lebensmittelteil mit Nasspanade, anschließend, während zumindest die Oberfläche der Nasspanade flüssig ist, mit der besprühten Trockenpanade bedeckt wird, wobei die Fettschicht (14) einen oder mehrere Proteine, das bzw. die bei Hitzeeinwirkung während der Zubereitung als Stockungs- und Verdickungsmittel dient bzw. dienen, umfasst, insbesondere 49 bis 90 Gew.% Pflanzenfett, das sich zumindest bei -10°C im festen Zustand befindet, zusammen mit 10 bis 51 Gew.% Eiklarpulver umfasst, insbesondere ferner 7 bis 15 Gew.% Magermilchpulver und/oder 2 bis 5 Gew.% Molkenpulver umfasst, insbesondere ausschließlich die angegebenen Bestandteile und ggf. weitere geschmacksgebende Bestandteile aufweist.

9. Verfahren nach einem der Ansprüche 5 bis 8, **dadurch gekennzeichnet, dass** das Lebensmittel nach der Trockenpanierung auf zumindest -18°C, insbesondere auf -25°C gefrostet wird.

10. Verfahren nach einem der Ansprüche 5 bis 9, **dadurch gekennzeichnet, dass** ein gefrorenes Lebensmittelteil eingesetzt wird, und insbesondere die Feuchtigkeitsbarriere mit einer Temperatur von 10 bis 20°C aufgetragen wird.

11. Verfahren nach einem der Ansprüche 5 bis 10, **dadurch gekennzeichnet, dass** die Feuchtigkeitsbarriere durch einen Tauch- und/oder Vorhangdosierer oder Spinningdiskdosierer aufgetragen wird, und insbesondere überschüssige Feuchtigkeitsbarriere, insbesondere mittels Druckluftdüsen, wieder entfernt wird.

12. Verfahren nach einem oder mehreren der Ansprüche 5 bis 1 1, **dadurch gekennzeichnet, dass** zur Herstellung der Feuchtigkeitsbarriere Pflanzenfett(e) geschmolzen, insbesondere bis auf 20 bis 40°C, insbesondere 23 bis 30°C, erwärmt werden, und insbesondere in einem, insbesondere temperierten Homogenisator, ggf. unter Zugabe weiterer Bestandteile, erwärmt und homogenisiert werden.

13. Verfahren nach einem oder mehreren der Ansprüche 1 bis 12, **dadurch gekennzeichnet, dass** der Lebensmittelkern (12) durch ein rohes Fischstück, einen Fleischkern, wie Geflügel, Rind oder Schwein im gegarten Zustand und/oder ein oder mehrere gegarte Gemüsestücke, gebildet wird.

14. Lebensmittel nach einem oder mehreren der Ansprüche 1 bis 4, **dadurch gekennzeichnet, dass** die Trockenpanade (16), insbesondere im Beisein von Fett, vor dem Aufbringen auf die Feuchtigkeitsbarriere (14) vorgeröstet oder mit Hitze vorbehandelt ist.

15. Verfahren nach einem oder mehreren der Ansprüche 8 bis 13, **dadurch gekennzeichnet, dass** die zur Trockenpanierung verwendete Panade vor der Trockenpanierung, insbesondere im Beisein von 2 bis 30 Gew.%, insbesondere 5 bis 15 Gew. %, Fett, insbesondere unter immer wiederkehrendem Rühren und Wenden, geröstet wird, insbesondere bei Temperaturen von 190 bis 230°C, insbesondere 200 bis 220°C, insbesondere bei Umluftbetrieb, insbesondere für 7 bis 15 Min.

## Claims

1. A deep-frozen breaded foodstuff (10), in particular ready-to-eat and which can be prepared in a microwave oven, comprising:
a. an aqueous foodstuff portion (12) with a dry breading (16)
b. whereas a moisture barrier (14) free from unbound water is applied between the aqueous foodstuff portion (12) and the dry breading;
c. whereas the moisture barrier (14) contains vegetable fat together with one or several proteins, comprising egg white and/or whey powder, used as a stock and thickener during the preparation when heat is applied, and **is in non-fluid condition, at least at 10°C** and
d. whereas the dry breading consists of heat-treated pieces of braiding and is covered by a waterproof protective layer.

2. A breaded foodstuff according to claim 1, **characterised in that** the vegetable fat constitute 49 to 90% in weight, in particular 58 to 68% in weight and the protein 10 to 51% in weight, in particular 25 to 40% in weight of the moisture barrier.

3. A breaded foodstuff according to one of the previous claims, **characterised in that** the moisture barrier (14) contains as proteins egg white powder, in particular 10 to 51% in weight and/or skimmed-milk powder, in particular 7 to 15% in weight and/or whey powder, in particular 2 to 5% in weight and if needed additional flavouring or colouring ingredients.

4. A breaded foodstuff according to one of the previous claims, **characterised in that** the dry breading (16) with 2 to 30% in weight, in particular 5 to 15% in weight is roasted in such a way that the maximal force for driving a 35-mm diameter rounded punch with 4 10-mm openings respectively, at a speed of 500 mm/min, in a specimen of 1 part of dry breading mixed with 2 parts of water after a downtime of 5 minutes, is equal to 10 to 70 N, in particular 17 to 50 N.

5. A foodstuff according to one or several of the preceding claims 1 to 4, **characterised in that** the protective layer is a fat layer and/or consists of a closed and welded plastic film wrapping, in which a water steam partial pressure of maximum 6 g/m³ and/or a vacuum of -0.3 to -0.98 bars reigns.

6. A method of manufacturing a breaded foodstuff, in particular according to one of the previous claims, **characterised in that** a foodstuff portion is coated with a liquid moisture barrier, in particular completely, and that subsequently a dry breading can be obtained with heat-treated pieces of braiding, while at least the surface of the moisture barrier is liquid, whereas the dry breading is covered with a protective layer impervious to water steam, and whereas the moisture barrier (14) contains 49 to 90% in weight of vegetable fat, which is in non-fluid condition, **at least at** -10°C, together with 10 to 51 % in weight of one or several proteins, comprising egg white and/or whey powder, used as a stock and thickener during the preparation when heat is applied and whereas the foodstuff is frozen after producing the dry breading.

7. The method according to claim 6, **characterised in that** the dry breading is produced, while the moisture barrier (14) has at least at ist surface a temperature of at least 10 to 20°C, and is further cooled down after application of the moisture barrier and before producing the dry breading.

8. A method of producing a breaded foodstuff according to one or several of the preceding claims 5 to 7, **characterised in that** the protective layer consists of a fat layer (14), which is applied in a sugar-coating process onto the heat-treated/pre-roasted dry breading (16), whereas in particular the dry breading is kept in movement in a drum, at a temperature of 15 to 25°C, in particular of 20 to 22°C, and is sprayed regularly with the fat layer at the same temperature and subsequently, in particular the sprayed dry breading, preferably with liquid nitrogen, is cooled down to -10°C while the dry breading is kept moving, and in particular, a foodstuff portion with moist breading, is next covered with the sprayed dry breading, while at least the surface of the moist breading is liquid, whereas the fat layer (14) contains one or several proteins, used as a stock and thickening ingredient during the preparation when heat is applied, comprises in particular 49 to 90% in weight of vegetable fat, which is in solid condition at a temperature of at least -10°C, together with 10 to 51% in weight of egg white powder, contains in particular moreover 7 to 15% in weight of skimmed-milk powder and/or 2 to 5% in weight of whey powder, and in particular includes the indicated ingredients and if needed additional flavouring ingredients.

9. The method according to one of the claims 5 to 8, **characterised in that** the foodstuff is frozen down to at least -18°C, in particular to -25°C, after production of the dry breading.

10. The method according to one of the claims 5 to 9, **characterised in that** a frozen foodstuff portion is used, and in particular the moisture barrier is applied at a temperature of 10 to 20°C.

11. The method according to one of the claims 5 to 10, **characterised in that** the moisture barrier is applied by an immersion and/or curtain dosing unit or spinning disc dosing unit, and in particular any excessive moisture barrier is again removed, in particular by means of compressed air nozzles.

12. The method according to one or several of claims 5 to 11, **characterised in that** to produce the moisture barrier, vegetable fats are melted and then heated in particular to 20-40°C, in particular 23-30°C, and heated up and homogenised in a tempered homogeniser, possible by adding further ingredients.

13. The method according to one or several of claims 1 to 12, **characterised in that** the foodstuff core (12) consists of a raw piece of fish, a meat core, such as poultry, beef or pork in matured condition and/or one or several matured pieces of vegetable.

14. The foodstuff according to one or several of the preceding claims 1 to 4, **characterised in that** the dry breading (16), in particular in the presence of fat, is pre-roasted or pre-treated with heat before application onto the moisture barrier (14).

15. The method according to one or several of claims 8 to 13, **characterised in that** the breading used to produce the dry breading is roasted before producing the dry breading, in particular in the presence of 2 to 30% in weight, in particular 5 to 15% in weight of fat, in particular while stirring and turning over continuously, in particular at temperatures of 190 to 230°C, in particular 200 to 220°C, in particular under recirculating air, in particular for 7 to 15 minutes.

## Revendications

1. Aliment pané surgelé (10), en particulier prêt à consommer et que l'on peut préparer au micro-onde, comprenant :
a. une partie aliment hydratée (12) avec une panade sèche (16)
b. où une barrière contre l'humidité (14) libre d'eau non-liée est appliquée entre la partie aliment hydratée (12) et la panade sèche ;
c. où la barrière contre l'humidité (14) renferme de la graisse végétale de même qu'une ou plusieurs protéines, contenant de la poudre de blancs d'oeuf et/ou de la poudre de petit lait, servant de bouillon et d'épaississant lors de l'effet de chaleur pendant la préparation et que l'on trouve à l'état non fluide, **du moins à** -10°C et
d. où la panade sèche se compose de morceaux de panade traités thermiquement et est gainée d'une couche de protection imperméable à l'eau.

2. Aliment pané selon la revendication 1, **caractérisé en ce que** la graisse végétale entre pour 49 à 90% en poids, en particulier 58 à 68% en poids et que la protéine entre pour 10 à 51 % en poids, en particulier 25 à 40% en poids dans la composition de la barrière contre l'humidité.

3. Aliment pané selon l'une des revendications précédentes, **caractérisé en ce que** la barrière contre l'humidité (14) présente au titre de protéine de la poudre de blancs d'oeuf, en particulier 10 à 51 % en poids et/ou la lait écrémé en poudre comporte de 7 à 15% en poids et/ou de poudre de petit lait, en particulier 2 à 5% en poids et le cas échéant d'autres composants renforçateurs de goût ou colorants.

4. Aliment pané selon l'une des revendications précédentes, **caractérisé en ce que** la panade sèche (16) comprenant 2 à 30% en poids, en particulier 5 à 15% en poids de graisse est torréfiée de telle sorte que la force maximale pour enfoncer un poinçon arrondi de 35 mm de diamètre et 4 ouvertures chacune de 10 mm à une vitesse de 500 mm/mini, dans un spécimen d'une partie de la panade sèche, mélangée à deux parties d'eau après une maturation de 5 minutes, soit de l'ordre de 10 à 70 N, en particulier de 17 à 50 N.

5. Aliment selon une ou plusieurs des revendications précédentes 1 à 4.
**caractérisé en ce que** la couche de protection est une couche de graisse et/ou est constituée d'un emballage de film plastique fermé et soudé, dans lequel règne une pression partielle d'évaporation d'eau au plus de 6g/m³ et/ou un vide de - 0,3 à - 0,98 bar.

6. Procédé de fabrication d'un aliment pané, en particulier selon l'une des revendications précédentes, **caractérisé en ce qu'**une partie aliment est enduite d'une barrière contre l'humidité liquide, en particulier complètement, avant d'obtenir une panade séchée avec des morceaux de panade traités thermiquement, tandis qu'au moins la surface de la barrière contre l'humidité est liquide, où la panade sèche est gainée d'une couche de protection imperméable à la vapeur d'eau, et
où la barrière contre l'humidité (14) comporte 49 à 90% en poids de graisse végétale, que l'on trouve à l'état non fluide, **du moins à** -10°C, avec 10 à 51 % en poids d'une ou de plusieurs protéines contenant de la poudre de blancs d'oeuf et/ou de la poudre de petit lait, servant de bouillon et d'épaississant lors de l'effet de chaleur pendant la préparation et où l'aliment est congelé après obtention de la panade sèche.

7. Procédé selon la revendication 6, **caractérisé en ce que** l'on obtient la panade sèche tandis que la barrière contre l'humidité (14) présente au moins en leur surface une température d'au moins 10 à 20°C, en particulier après application de la barrière contre l'humidité, avant nouveau refroidissement avant obtention de la panade sèche.

8. Procédé de fabrication d'un aliment pané selon une ou plusieurs des revendications précédentes 5 à 7, **caractérisé en ce que** la couche de protection est composée d'une couche de graisse (14), Que l'on applique dans un processus de dragéification sur la panade sèche traitée thermiquement ou prétorréfiée (16), où en particulier la panade sèche est maintenue en mouvement à une température de 15 à 25°C, en particulier de 20 à 22°C, dans un tambour, enduite de façon régulière par pulvérisation de la couche de graisse à la même température, puis en particulier la panade sèche enduite par pulvérisation, est refroidi au moins à -10°C avec de l'azote liquide, en poursuivant le mouvement de la panade sèche, puis en particulier une partie aliment présentant la panade humide est recouverte de la panade sèche enduite par pulvérisation, pendant qu'au moins la surface de la panade humide est liquide, où la couche de graisse (14) contient une ou plusieurs protéines, servant de bouillon et d'épaississant lors de l'effet de chaleur pendant la préparation, comporte en particulier 49 à 90% en poids de graisse végétale, que l'on trouve à l'état solide au moins à -10°C, avec 10 à 51 % en poids de poudre de blancs d'oeuf, contient en outre 7 à 15% en poids de lait écrémé en poudre et/ou 2 à 5% en poids de poudre de petit lait, présente en particulier exclusivement les composants indiqués et le cas échéant d'autres composants renforçateurs de goût.

9. Procédé selon l'une des revendications 5 à 8, **caractérisé en ce que** l'aliment est congelé à au moins -18°C, en particulier -25°C après obtention de la panade sèche.

10. Procédé selon l'une des revendications 5 à 9, **caractérisé en ce que** l'on utilise une partie aliment congelée, et que l'on applique la barrière contre l'humidité à une température de 10 à 20°C.

11. Procédé selon l'une des revendications 5 à 10, **caractérisé en ce que** l'on applique la barrière contre l'humidité à l'aide d'une doseuse d'immersion et/ou d'une doseuse de type rideau ou d'une doseuse à disque rotatif, et qu'en particulier l'on retire de nouveau la barrière contre l'humidité excessive, en particulier en utilisant des buses à air comprimé.

12. Procédé selon une ou plusieurs des revendications 5 à 11, **caractérisé en ce que** pour obtenir la barrière contre l'humidité, l'on fait fondre des graisses végétales, avant de les réchauffer en particulier à une température de 20 à 40°C, plus particulièrement de 23 à 30°C, puis de les réchauffer et de les homogénéiser dans un homogénisateur tempéré, le cas échéant en ajoutant d'autres composants.

13. Procédé selon une ou plusieurs des revendications 1 à 12, **caractérisé en ce que** le noyau de l'aliment (12) est constitué d'un morceau de poisson cru, d'un noyau de viande, comme de la volaille, du boeuf ou du porc après cuisson et/ou un ou plusieurs morceaux de légumes cuisinés.

14. Aliment selon une ou plusieurs des revendications précédentes 1 à 4.
**caractérisé en ce que** la panade sèche (16) est prétorréfiée ou prétraitée thermiquement, en particulier en présence de graisse, avant application sur la barrière contre l'humidité (14).

15. Procédé selon une ou plusieurs des revendications 8 à 13, **caractérisé en ce que** l'on torréfie la panade utilisée pour obtenir la panade sèche, avant obtention de la panade sèche, en particulier en présence de 2 à 30% en poids, en particulier de 5 à 15% en poids de graisse, en particulier en continuant à remuer et à retourner en particulier à des températures de 190 à 230°C, en particulier 200 à 220°C, en particulier avec une ventilation en circuit fermé, en particulier pendant 7 à 15 minutes.
